# EUROPEAN PATENT APPLICATION

(11) **EP 3 654 414 A1**
(43) Date of publication of application: **20.05.2020**
(21) Application number: 18832875.1
(22) Date of filing: 10.07.2018
(51) Int. Cl.: H01M 4/04, B05D 3/12, B32B 7/02, B32B 7/12, H01G 11/38, H01G 11/86, H01M 4/02, H01M 4/66

(54) **LAMINATE FOR ELECTROCHEMICAL ELEMENTS AND METHOD FOR PRODUCING MEMBER FOR ELECTROCHEMICAL ELEMENTS**

(30) Priority: 12.07.2017 JP 2017136279
(71) Applicant: Zeon Corporation, Tokyo 100-8246 (JP)
(72) Inventor: ONISHI Kazuyuki, Tokyo 100-8246 (JP); MATSUMURA Taku, Tokyo 100-8246 (JP)
(74) Representative: Ehlich, Eva Susanne
(86) International application number: PCT/JP2018/026084
(87) International publication number: WO 2019/013219

(57) **Abstract**

A laminate for an electrochemical device includes an adhesive layer and an electrode mixed material layer, in stated order, on a surface of a support. The support has a tensile modulus of elasticity of not less than 10 MPa and not more than 1,000 MPa.

## Description

### TECHNICAL FIELD

The present disclosure relates to a laminate for an electrochemical device and a method of producing a component for an electrochemical device. In particular, the present disclosure relates to a laminate for an electrochemical device that can be used to produce a component for an electrochemical device and to a method of producing a component for an electrochemical device in which this laminate for an electrochemical device is used.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

An electrode for a lithium ion secondary battery, for example, generally includes a current collector and an electrode mixed material layer (positive electrode mixed material layer or negative electrode mixed material layer) disposed on the current collector. Electrodes have conventionally been formed by various formation methods. For example, a method in which a slurry composition containing an electrode active material, a binder, a conductive material, and so forth is applied onto a current collector has generally been adopted in order to provide an electrode mixed material layer on an electrode. Another method that has been proposed for producing an electrode is a method in which an electrode mixed material layer is formed on a support other than a current collector so as to obtain an electrode mixed material layer-equipped support, and then this electrode mixed material layer-equipped support is used to "transfer" the electrode mixed material layer to a laminate that includes a current collector (for example, refer to Patent Literature (PTL) 1).

In PTL 1, three methods are given as examples of methods for forming the electrode mixed material layer of the electrode mixed material layer-equipped support. The first example is a method in which an electrode composition obtained through kneading of an electrode active material, a binder, a conductive material, and so forth is formed into a sheet shape and then the resultant formed product is stacked on a support (composition sheet-forming method). The second example is a method in which a slurry composition containing an electrode active material, a binder-containing binder composition, and so forth is applied onto a support and then the applied slurry composition is dried (application method). The third example is a method in which an electrode active material, a binder, a conductive material, and so forth are mixed and granulated, and then composite particles obtained as the granulated product are formed into a sheet-shaped electrode active material layer (composite particle sheet-forming method). Of these methods, PTL 1 mentions the application method as being preferable in terms that this method enables uniform formation of an electrode active material layer on a surface of a support. Moreover, PTL 1 specifically proposes that an electrode mixed material layer-equipped support formed by the application method may be pasted together with a current collector and then the support may be separated to form an electrode for an electrochemical device.

### CITATION LIST

### Patent Literature

PTL 1: JP 2011-77070 A

### SUMMARY

### (Technical Problem)

In recent years, there has been a need to increase the edge strength of electrode mixed material layers in order to improve electrochemical characteristics of electrochemical devices. Moreover, electrochemical devices including electrode mixed material layers having high basis weight accuracy have been required in recent years with the aim of achieving more uniform electrochemical device performance. However, it has not been possible to achieve a balance of high levels of edge strength and basis weight accuracy for an electrode mixed material layer included in an electrochemical device obtained when using a conventional electrode mixed material layer-equipped support such as disclosed in PTL 1.

Accordingly, an objective of the present disclosure is to provide a laminate for an electrochemical device capable of forming a component for an electrochemical device that includes an electrode mixed material layer having high edge strength and basis weight accuracy.

Another objective of the present disclosure is to provide a method of producing a component for an electrochemical device that includes an electrode mixed material layer having high edge strength and basis weight accuracy.

### (Solution to Problem)

The inventors conducted diligent investigation to achieve the objectives set forth above. The inventors discovered that by using a support having a tensile modulus of elasticity within a specific range as the constituent support of an electrode mixed material layer-equipped support, the edge strength and basis weight accuracy of an electrode mixed material layer included by a component for an electrochemical device, such as an electrode, can be remarkably improved, and in this manner completed the present disclosure.

Specifically, the present disclosure aims to advantageously solve the problems set forth above by disclosing a laminate for an electrochemical device comprising an adhesive layer and an electrode mixed material layer, in stated order, on a surface of a support, wherein the support has a tensile modulus of elasticity of not less than 10 MPa and not more than 1,000 MPa. When the adhesive layer and the electrode mixed material layer are disposed in this order on the support having a tensile modulus of elasticity of not less than 10 MPa and not more than 1,000 MPa, edge strength and basis weight accuracy of an electrode mixed material layer obtained using the laminate for an electrochemical device can be improved in a good balance. The "tensile modulus of elasticity" of a support referred to in the present specification can be measured in accordance with JIS K7127.

In the presently disclosed laminate for an electrochemical device, the adhesive layer preferably contains an active energy ray-curable adhesive. When the adhesive layer of the laminate for an electrochemical device contains an active energy ray-curable adhesive, the basis weight accuracy of an electrochemical device obtained using the laminate for an electrochemical device can be further increased.

In the presently disclosed laminate for an electrochemical device, the adhesive layer preferably has a thickness of not less than 1 µm and not more than 50 µm. When the thickness of the adhesive layer of the laminate for an electrochemical device is within the range set forth above, this enables good holding of the electrode mixed material layer on the support and can increase the ease of transfer during electrode mixed material layer transfer using the laminate for an electrochemical device.

In the presently disclosed laminate for an electrochemical device, the support preferably has a thickness of not less than 10 µm and not more than 200 µm. When the thickness of the support of the laminate for an electrochemical device is within the range set forth above, handleability and ease of transfer during electrode mixed material layer transfer using the laminate for an electrochemical device can be increased, and the basis weight accuracy of an obtained component for an electrochemical device can be further improved.

In the presently disclosed laminate for an electrochemical device, the electrode mixed material layer preferably contains organic particles having a glass-transition temperature of not lower than -40°C and not higher than 20°C. When the electrode mixed material layer contains organic particles having a glass-transition temperature that satisfies the specific range set forth above, the strength of the electrode mixed material layer can be improved, and electrical characteristics of an obtained electrochemical device can be improved. Note that the "glass-transition temperature" of organic particles referred to in the present disclosure can be measured by a measurement method described in the EXAMPLES section of the present specification.

In the presently disclosed laminate for an electrochemical device, a split starting point is preferably present in the electrode mixed material layer. When the laminate for an electrochemical device has a split starting point in the electrode mixed material layer, an electrode mixed material layer having excellent basis weight accuracy can be efficiently produced using the laminate for an electrochemical device.

Moreover, the present disclosure aims to advantageously solve the problems set forth above by disclosing a method of producing a component for an electrochemical device including an electrode mixed material layer, comprising: a dicing step of dicing any one of the laminates for an electrochemical device set forth above to obtain a diced laminate; a splitting step of stretching the support of the diced laminate to split the electrode mixed material layer in a direction of the stretching and obtain a split electrode mixed material layer; an adhering step of adhering the split electrode mixed material layer to a substrate for an electrochemical device to obtain a preliminary component; and a peeling step of peeling the support from the preliminary component. By implementing the dicing step and the splitting step at an earlier stage than a step for electrode mixed material layer transfer (i.e., the adhering step and the peeling step) as set forth above in production of a component for an electrochemical device using the presently disclosed laminate for an electrochemical device, it is possible to provide a component for an electrochemical device including an electrode mixed material layer that has high edge strength and basis weight accuracy.

In the presently disclosed method of producing a component for an electrochemical device, an occupied area ratio of the split electrode mixed material layer relative to the substrate for an electrochemical device is preferably not less than 50 area% and not more than 95 area%. When the occupied area ratio of the split electrode mixed material layer is within the range set forth above, a component for an electrochemical device that is capable of improving electrochemical device production efficiency is obtained.

The "occupied area ratio of the split electrode mixed material layer relative to the substrate for an electrochemical device" referred to in the present disclosure is the occupied area ratio of a plurality of split electrode mixed material layers included at the surface of a substrate for an electrochemical device that is obtained through the peeling step, based on the area of the surface of the substrate at the side including the split electrode mixed material layers, and can be calculated by a method described in the EXAMPLES section of the present specification.

In the presently disclosed method of producing a component for an electrochemical device, a rate of change of electrode mixed material layer density when comparing before the adhering step and after the adhering step is preferably not less than 5% and not more than 20%. When the rate of change of density of the electrode mixed material layer between before and after transfer is not less than 5% and not more than 20%, the ease of transfer can be increased while enabling good positioning of the electrode mixed material layer on a laminate by transfer.

The "rate of change of electrode mixed material layer density" referred to in the present disclosure can be calculated by a method described in the EXAMPLES section of the present specification.

In the presently disclosed method of producing a component for an electrochemical device, it is preferable that an outermost layer of the substrate for an electrochemical device is a conductive adhesive layer and that the conductive adhesive layer is adhered to the split electrode mixed material layer in the adhering step. When the outermost layer of the substrate for an electrochemical device is a conductive adhesive layer, the ease of transfer during electrode mixed material layer transfer using the laminate for an electrochemical device can be increased.

### (Advantageous Effect)

According to the present disclosure, it is possible to provide a laminate for an electrochemical device capable of forming a component for an electrochemical device that includes an electrode mixed material layer having high edge strength and basis weight accuracy.

Moreover, according to the present disclosure, it is possible to provide a method of producing a component for an electrochemical device that includes an electrode mixed material layer having high edge strength and basis weight accuracy.

### BRIEF DESCRIPTION OF THE DRAWINGS

In the accompanying drawings:
FIG. 1 is a schematic cross-sectional view illustrating a laminate for an electrochemical device and so forth in steps that can be included in the presently disclosed production method;
FIG. 2 is a schematic plan view illustrating a laminate for an electrochemical device and so forth in steps that can be included in the presently disclosed production method; and
FIG. 3 illustrates an example of schematic configuration of a hot roll stretching device that can be used in the presently disclosed production method.

### DETAILED DESCRIPTION

The following provides a detailed description of embodiments of the present disclosure.

The presently disclosed laminate for an electrochemical device can suitably be used without any specific limitations in production of an electrode of an electrochemical device such as a lithium ion secondary battery or an electric double-layer capacitor. Moreover, the presently disclosed laminate for an electrochemical device can suitably be used in any method of producing a component for an electrochemical device without any specific limitations other than that the method includes an operation of forming an electrode mixed material layer through transfer. In particular, the presently disclosed laminate for an electrochemical device can suitably be used in the presently disclosed method of producing a component for an electrochemical device.

The following provides a detailed description of the present disclosure using a case in which the electrochemical device is a lithium ion secondary battery as an example.

### (Laminate for electrochemical device)

The presently disclosed laminate for an electrochemical device includes an adhesive layer and an electrode mixed material layer, in stated order, on a surface of a support. Note that the support and the adhesive layer may be adjacent to one another without another layer or the like interposed between the support and the adhesive layer. Moreover, the adhesive layer and the electrode mixed material layer may be adjacent to one another without another layer or the like interposed between the adhesive layer and the electrode mixed material layer. A feature of the presently disclosed laminate for an electrochemical device is that the support has a tensile modulus of elasticity of not less than 10 MPa and not more than 1,000 MPa. As a result of the presently disclosed laminate for an electrochemical device including the adhesive layer between the support and the electrode mixed material layer and as a result of the tensile modulus of elasticity of the support satisfying the specific range set forth above, an electrode mixed material layer excelling in terms of both edge strength and basis weight accuracy can be formed when an adhering step and a peeling step (hereinafter, these steps are also referred to collectively as a "transferring step") are implemented.

### [Support]

As described above, the support is required to have a tensile modulus of elasticity of not less than 10 MPa and not more than 1,000 MPa. The tensile modulus of elasticity of the support is preferably 40 MPa or more, more preferably 100 MPa or more, and even more preferably 350 MPa or more, and is preferably 800 MPa or less, more preferably 600 MPa or less, and even more preferably 450 MPa or less. The support has an appropriate level of strength when the tensile modulus of elasticity of the support is not less than any of the lower limits set forth above. As a result, it is possible to effectively inhibit excessive stretching of the support during transfer or the like using the laminate for an electrochemical device, and thus the occurrence of "kinks" in the surface of an electrode mixed material layer obtained through transfer can be inhibited. This can also suitably inhibit reduction of basis weight accuracy caused by "kinks". Moreover, the support has an appropriate level of flexibility when the tensile modulus of elasticity of the support is not more than any of the upper limits set forth above. As a result, during transfer or the like using the laminate for an electrochemical device, the support can easily be peeled, the occurrence of residual electrode mixed material layer at the support side can be inhibited, and the basis weight accuracy of an electrode mixed material layer included by the obtained component for an electrochemical device can be increased. When the support has an appropriate level of flexibility, distortion or the like of the support during transfer and distortion of an electrode mixed material layer obtained through transfer, leading to reduced basis weight accuracy, can be inhibited.

Any support may be used as the support without any specific limitations so long as the tensile modulus of elasticity thereof is not less than 10 MPa and not more than 1,000 MPa. For example, a thermoplastic resin film formed from a thermoplastic resin may be used as the support. Specific examples of such thermoplastic resins include polyvinyl alcohol resin, polypropylene resin, polyethylene resin, ethylene-vinyl acetate copolymer, ethylene-methacrylic acid copolymer, ion cross-linked product of ethylene-methacrylic acid copolymer, acid-modified olefin resin such as maleic anhydride-modified polypropylene, ethylene-propylene copolymer, ethylene-butene copolymer, styrene-butadiene copolymer, acrylonitrile-butadiene copolymer, and mixtures thereof. Moreover, a multilayer structure film including a film or the like formed from a material of any of the preceding examples may be used as the support. The multilayer structure may be obtained through stacking of a plurality of layers of films or the like of the same type or different types.

The thickness of the support is not specifically limited but is preferably 10 µm or more, and more preferably 30 µm or more, and is preferably 200 µm or less, and more preferably 150 µm or less. Handleability during electrode mixed material layer transfer using the laminate for an electrochemical device can be improved when the thickness of the support is not less than any of the lower limits set forth above. Moreover, ease of transfer during electrode mixed material layer transfer using the laminate for an electrochemical device can be increased and basis weight accuracy of an obtained component for an electrochemical device can be further improved when the thickness of the support is not more than any of the upper limits set forth above. Particularly in a case in which the adhesive layer contains an active energy ray-curable adhesive as described further below, setting the thickness of the support as not more than any of the upper limits set forth above can increase transmission of active energy rays and enable good curing of the adhesive layer when the adhesive layer is irradiated with active energy rays through the support during transfer, and can thereby further increase the ease of peeling during transfer. The width of the support is not specifically limited but is preferably 100 mm or more, and more preferably 200 mm or more, and is preferably 1,000 mm or less, and more preferably 500 mm or less.

One or more surfaces of the support may be subjected to release treatment from a viewpoint of increasing the ease of peeling. The method of release treatment may, for example, be a method in which a silicone resin, a fluororesin, a thermosetting resin such as an alkyd resin, or the like is applied onto the surface of the support to form a coating film, and then the obtained coating film is cured as necessary, but is not specifically limited to this method. From a viewpoint of ease of peeling, the surface of the support is preferably smooth, and the support is preferably not formed from a material having comparatively high surface roughness, such as a porous material.

Note that the support can be used repeatedly and that repeated use thereof can further reduce the production cost of a component for an electrochemical device.

### [Adhesive layer]

The adhesive layer is non-conductive and is disposed on the surface of the support. The adhesive layer functions to adhere the electrode mixed material layer to the support and also to enable peeling of the electrode mixed material layer from the support during electrode mixed material layer transfer using the presently disclosed laminate for an electrochemical device. The tensile modulus of elasticity of the adhesive layer is lower than that of the support. Note that the adhesive layer may remain on the electrode mixed material layer and/or on the support after peeling. In a case in which an electrode is formed through electrode mixed material layer transfer, for example, adhesive layer remaining on the electrode mixed material layer can function as a layer for improving heat resistance and strength of a separator.

The adhesive layer may contain an adhesive and other optional components. The following describes each component in detail.

### <Adhesive>

Typical known materials can be used as the adhesive without any specific limitations. Adhesives can be classified as various types according to their main component and method of curing. The adhesive may, for example, be an adhesive having an elastomer as a main component. Of such adhesives, an adhesive having SBR as a main component is preferable. The adhesive may, in terms of curing method, be a pressure-sensitive adhesive, an active energy ray-curable adhesive, a thermosetting adhesive, an active energy ray foaming adhesive, a heat foaming adhesive, or the like. Of these adhesives, active energy ray-curable adhesives are preferable. In particular, it is preferable that the adhesive is an active energy ray-curable adhesive from a viewpoint of further increasing basis weight accuracy of an obtained electrochemical device. An active energy ray-curable adhesive is also preferable because adhesive force can be controlled by adjusting the irradiation intensity of active energy rays.

The active energy ray-curable adhesive may be an adhesive that can be cured through irradiation with active energy rays such as ultraviolet light, visible light, an electron beam, or X-rays without any specific limitations. In particular, an ultraviolet-curable adhesive is preferable.

The ultraviolet-curable adhesive preferably includes an acrylic resin in which a functional group that can be caused to react through ultraviolet light is chemically bonded. The acrylic resin described above can be a known material such as described in JP 2015-43372 A, for example.

### <Optional components>

Optional components such as solvents, polymerization initiators, tack adjusters, curing accelerators (for example, refer to JP 2015-43372 A), non-conductive particles, and conductive substances can be compounded in the adhesive layer. The non-conductive particles or conductive substance may, for example, be known non-conductive particles or a known conductive substance that can be used in an electrochemical device such as a non-aqueous secondary battery.

### -Formation method of adhesive layer-

The adhesive layer can be formed by first preparing a composition for an adhesive layer (adhesive layer composition preparation step) and then applying the composition for an adhesive layer onto the surface of the support to obtain a coating film (application step). In the adhesive layer composition preparation step, the composition for an adhesive layer can, without any specific limitations, be prepared by dispersing the previously described components in any dispersion medium, such as water. Although the dispersing can be carried out by any method without any specific limitations, the dispersing is normally carried out by mixing using a disperser as a mixing device so as to efficiently disperse the components. The disperser is preferably a device that can homogeneously disperse and mix the components. Examples of dispersers that can be used include a ball mill, a sand mill, a pigment disperser, a grinding machine, an ultrasonic disperser, a homogenizer, and a planetary mixer. A high-level disperser such as a bead mill, a roll mill, or a FILMIX is preferably used from a viewpoint that such a disperser can impart a high level of dispersing shear.

No specific limitations are placed on the method by which the composition for an adhesive layer is applied onto the support in the application step. Examples of methods that can be used include spray coating, doctor blading, reverse roll coating, direct roll coating, gravure coating, extrusion coating, and brush coating. Of these methods, gravure coating and spray coating are preferable.

### -Thickness of adhesive layer-

The thickness of the adhesive layer is preferably 1.0 µm or more, and more preferably 2.0 µm or more, and is preferably 30 µm or less, more preferably 20 µm or less, and even more preferably 14 µm or less. When the thickness of the adhesive layer is not less than any of the lower limits set forth above, adhesiveness between the support and the electrode mixed material layer can be increased, and basis weight accuracy of the electrode mixed material layer can be further increased. Moreover, when the thickness of the adhesive layer is not more than any of the upper limits set forth above, ease of transfer during electrode mixed material layer transfer using the laminate for an electrochemical device can be increased, and basis weight accuracy of the electrode mixed material layer can be further increased. Also note that in a case in which the adhesive layer is formed using an active energy ray-curable adhesive, setting the thickness of the adhesive layer as not more than any of the upper limits set forth above can prevent the effect of irradiation with active energy rays becoming time consuming and can increase production efficiency of a component for an electrochemical device.

### [Electrode mixed material layer]

The electrode mixed material layer is disposed on the surface of the adhesive layer. The electrode mixed material layer is formed using a composition for an electrode mixed material layer that contains an electrode active material. The tensile modulus of elasticity of the electrode mixed material layer is lower than that of the support. In addition to the electrode active material, the composition for an electrode mixed material layer preferably contains organic particles that function to hold the electrode active material in the electrode mixed material layer. Moreover, the composition for an electrode mixed material layer may optionally contain a solvent, a known conductive substance such as any of those listed as conductive substances that can be contained in the subsequently described conductive adhesive layer, known additives such as a dispersant and a thickener, and so forth.

No specific limitations are placed on the electrode active material, and any of the typical electrode active materials described in JP 2011-77070 A and JP 2010-97830 A, such as graphite and lithium cobalt oxide, may be used.

A known binder (for example, a thermoplastic elastomer) may be used as the organic particles without any specific limitations other than being able to function to hold the electrode active material in the electrode mixed material layer. More specifically, a conjugated diene polymer, an acrylic polymer, a fluoropolymer, a polyimide polymer, a polyamide polymer, a polyurethane polymer, or the like can be used. Of these examples, polymers that include an aromatic vinyl monomer unit and an aliphatic conjugated diene monomer unit, such as styrene-butadiene copolymer (SBR), and fluoropolymers such as polyvinylidene fluoride are preferable as the organic particles.

The glass-transition temperature of the organic particles is preferably -40°C or higher, and more preferably -30°C or higher, and is preferably 20°C or lower, and more preferably 15°C or lower. When the glass-transition temperature is not lower than any of the lower limits set forth above, the ease of transfer during electrode mixed material layer transfer using the laminate for an electrochemical device can be improved. Moreover, when the glass-transition temperature is not higher than any of the upper limits set forth above, strength of the electrode mixed material layer can be improved. The glass-transition temperature of the organic particles can be adjusted by altering the chemical composition of monomers used for preparation of the polymer.

The method by which the electrode mixed material layer is formed is not specifically limited and may be a conventionally known method such as the previously described application method, composite particle sheet-forming method, or composition sheet-forming method.

Of these methods, composite particle sheet-forming is preferable in terms that a thick electrode can be formed without the need for a drying step. The composite particle sheet-forming may, more specifically, be carried out with reference to a procedure described in JP 2010-97830 A. A sheet-forming step in the composite particle sheet-forming can be implemented by extrusion molding, roll rolling, or pressure forming without any specific limitations. Of these methods, pressure forming is preferable because of the simplicity of equipment by which it can be performed. In particular, the adoption of powder pressure forming is more preferable. The powder pressure forming may, for example, be roll pressure forming in which composite particles are supplied to a roll-type pressure forming machine by a feeding device such as a screw feeder and then an electrode mixed material layer is formed, a method in which composite particles are spread onto the adhesive layer, the composite particles are then evened using a blade or the like to adjust the thickness, and subsequently forming is performed by a pressure application device, or a method in which composite particles are loaded into a mold and then pressure is applied to the mold to perform forming.

### -Thickness of electrode mixed material layer-

The thickness of the electrode mixed material layer is preferably 50 µm or more, and more preferably 60 µm or more, and is preferably 2,000 µm or less, and more preferably 500 µm or less. The thickness of the electrode mixed material layer can be adjusted by, for example, adjusting the basis weight of composite particles in a case in which composite particles are used and/or by altering the pressure in a pressure application step in a case in which the formation method is accompanied by a pressure application step.

### -Split starting point in electrode mixed material layer-

The electrode mixed material layer preferably has a split starting point. By providing a split starting point in the electrode mixed material layer of the laminate for an electrochemical device, the laminate for an electrochemical device can be used to efficiently produce an electrode mixed material layer having excellent basis weight accuracy.

Note that the "split starting point" referred to here may be an incision, a notch, or a depression of any shape without any specific limitations so long as it can become a starting point in splitting of the electrode mixed material layer in a subsequently described splitting step. These split starting point shapes may be a straight line shape or a dashed line shape (perforated shape) without any specific limitations. The split starting point is formed in at least the electrode mixed material layer and is preferably formed to a depth of 80% or more in the thickness direction of the electrode mixed material layer. Moreover, the split starting point may penetrate through the electrode mixed material layer to reach the adhesive layer, or may penetrate through the electrode mixed material layer and the adhesive layer to reach the support. Particularly in a case in which the shape of the split starting point is a non-continuous shape, such as a dashed line shape, the split starting point may penetrate through the laminate for an electrochemical device in the thickness direction.

### (Method of producing component for electrochemical device)

The presently disclosed method of producing a component for an electrochemical device (hereinafter, also referred to simply as the "presently disclosed production method") is a method of producing a component for an electrochemical device that includes an electrode mixed material layer. More specifically, the presently disclosed production method includes: a dicing step of dicing a laminate for an electrochemical device to obtain a diced laminate; a splitting step of stretching a support of the diced laminate to split an electrode mixed material layer in a direction of the stretching and obtain a split electrode mixed material layer; an adhering step of adhering the split electrode mixed material layer to a substrate for an electrochemical device to obtain a preliminary component; and a peeling step of peeling the support from the preliminary component. In electrode mixed material layer transfer, by implementing the dicing step and the splitting step at an earlier stage than a step for electrode mixed material layer transfer (i.e., the adhering step and the peeling step) as set forth above, it is possible to provide a component for an electrochemical device including an electrode mixed material layer that has high edge strength and basis weight accuracy. The presently disclosed production method may optionally include a preparation step at an earlier stage than the adhering step.

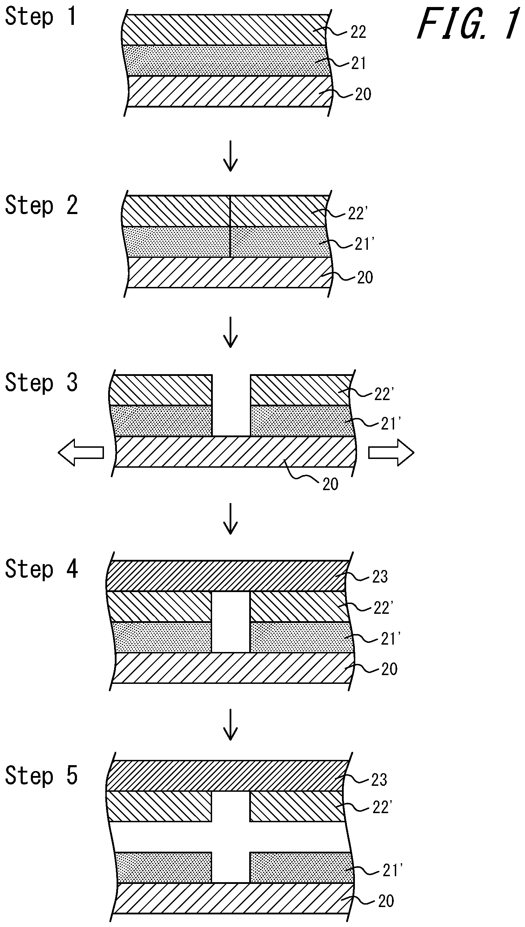

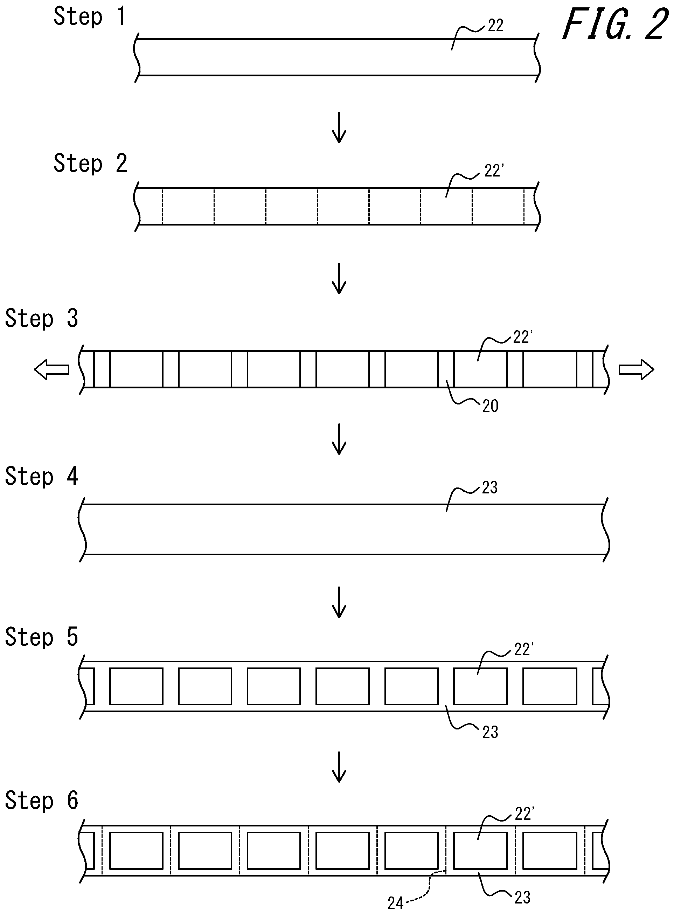

The following first provides an overview of the flow of the presently disclosed production method with reference to FIGS. 1 and 2, and then describes each step in detail. Firstly, FIG. 1 is a diagram for describing schematic cross-sectional structure of a laminate for an electrochemical device, a substrate for an electrochemical device, and so forth in each step included in the presently disclosed production method. Note that in FIG. 1, step 1 corresponds to the preparation step, step 2 corresponds to the dicing step, step 3 corresponds to the splitting step, step 4 corresponds to the adhering step, and step 5 corresponds to the peeling step. In step 1 (preparation step), a laminate for an electrochemical device that includes an adhesive layer 21 and an electrode mixed material layer 22 stacked in this order on the surface of a support 20 is prepared. In step 2 (dicing step), the laminate for an electrochemical device that is prepared in step 1 is diced to obtain a diced laminate including an electrode mixed material layer (22') having a split starting point and an adhesive layer (21') having a split starting point. Next, the support 20 of the diced laminate is stretched in step 3 (splitting step) to obtain a split electrode mixed material layer 22' and, optionally, a split adhesive layer 21'. The split electrode mixed material layer is subsequently adhered to a substrate 23 for an electrochemical device in step 4 (adhering step) to obtain a preliminary component. The support 20 is then peeled from the preliminary component in step 5 (peeling step). Note that although FIG. 1 schematically illustrates the split adhesive layer 21' being peeled from the split electrode mixed material layer 22' in accompaniment to the support 20 in step 5, part or all of the split adhesive layer 21' may remain at the side corresponding to the split electrode mixed material layer 22' as previously described.

FIG. 2 is a schematic plan view illustrating the laminate for an electrochemical device and so forth in steps 1 to 5, and in an optional step 6. The diagram for step 1 is a plan view of the laminate for an electrochemical device as viewed from the side corresponding to the electrode mixed material layer 22. Note that although FIG. 2 schematically illustrates the width of the electrode mixed material layer 22 and the width of the support 20 as being the same, this configuration is not a limitation and a configuration may be adopted in which the width of the electrode mixed material layer 22 is smaller than the width of the support 20 such that in the width direction of the support 20, there is a region in which the electrode mixed material layer 22 is not formed. The diagram for step 2 is a plan view of the laminate for an electrochemical device as viewed from the side corresponding to the electrode mixed material layer (22') having a split starting point (illustrated as a dashed line). The diagram for step 3 is a plan view illustrating the laminate for an electrochemical device including the split electrode mixed material layer 22' that is formed through stretching of the support 20 in a longitudinal direction. The diagram for step 4 is a plan view illustrating a stacked product obtained by stacking the substrate 23 for an electrochemical device on the laminate for an electrochemical device, as viewed from a side corresponding to the substrate 23 for an electrochemical device. The diagram for step 5 is a plan view illustrating a state in which the split electrode mixed material layer 22' is adhered on the surface of the substrate 23 for an electrochemical device. The diagram for step 6, which is an optional cutting line formation step, is a plan view illustrating a state in which a cutting line 24 is formed in the substrate for an electrochemical device including the split electrode mixed material layer 22' at the surface.

### (Preparation step)

In the preparation step, a laminate for an electrochemical device and a substrate for an electrochemical device that includes a conductive adhesive layer are prepared. One example of a laminate for an electrochemical device that may be prepared in the preparation step is the presently disclosed laminate for an electrochemical device, which can be produced as previously described.

### <Substrate for electrochemical device>

In addition to the laminate for an electrochemical device, a substrate for an electrochemical device is also prepared in the preparation step. An outermost layer of the substrate for an electrochemical device is preferably a conductive adhesive layer. When the outermost layer of the substrate for an electrochemical device is a conductive adhesive layer, ease of transfer during electrode mixed material layer transfer using the laminate for an electrochemical device can be increased. The conductive adhesive layer may contain, for example, a conductive substance, a binder for a conductive adhesive layer, and optional additives.

### [Substrate]

No specific limitations are placed on the substrate included in the substrate for an electrochemical device. The substrate may be any substrate known as an electrode substrate for an electrochemical device and may be selected as appropriate depending on the type of target electrochemical device. For example, a material having electrical conductivity and electrochemical durability may be used as a current collector. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio.

### [Conductive adhesive layer]

Examples of conductive substances that can be contained in the conductive adhesive layer include, but are not specifically limited to, graphite, carbon black, carbon fibers, carbon whiskers, carbon nanofibers, and carbon nanotubes. One of these conductive substances may be used individually, or two or more of these conductive substances may be used in combination in a freely selected ratio. Of these conductive substances, graphite and carbon black are preferable from a viewpoint of increasing the capacity of an obtained electrochemical device.

Moreover, the binder for a conductive adhesive layer contained in the conductive adhesive layer may, for example, be any of the same thermoplastic elastomers as the organic particles that can be contained in the electrode mixed material layer. In particular, conjugated diene polymers and acrylic polymers are preferable as the binder for a conductive adhesive layer, and acrylic polymers are more preferable as the binder for a conductive adhesive layer.

The conductive adhesive layer may further contain optional additives such as a dispersant. Suitable examples of dispersants that can be used include, but are not specifically limited to, alkali metal salts of carboxymethyl cellulose.

The conductive adhesive layer can be formed through a conductive adhesive layer composition preparation step of compounding and mixing the various components, an application step, and an optional drying step. Note that the subsequently described adhering step may be implemented without drying a coating film of the composition for a conductive adhesive layer.

### -Thickness of conductive adhesive layer-

The thickness of the conductive adhesive layer is preferably 1.5 µm or more, and more preferably 1.9 µm or more, and is preferably 3.0 µm or less, and more preferably 2.2 µm or less. Adhesive force of the conductive adhesive layer can be increased when the thickness of the conductive adhesive layer is not less than any of the lower limits set forth above. Moreover, electrochemical characteristics of an obtained electrochemical device can be improved when the thickness of the conductive adhesive layer is not more than any of the upper limits set forth above.

### (Dicing step)

In the dicing step, the laminate for an electrochemical device is diced to obtain a diced laminate. The term "dicing" as used in the present specification refers to the formation of a split starting point in at least the electrode mixed material layer of the laminate for an electrochemical device. Moreover, the term "diced laminate" refers to a laminate obtained through formation of a split starting point in the dicing step.

Note that suitable configurations for the split starting point are as previously described in the "Split starting point in electrode mixed material layer" section in relation to the laminate for an electrochemical device. The split starting point can be formed in the electrode mixed material layer in the dicing step by a known means such as using a perforating blade having any tie-cut pattern. The split starting point is formed in at least part of the electrode mixed material layer and may optionally reach the adhesive layer and/or the support.

Note that split starting points are normally provided in the dicing step such that the electrode mixed material layer can be split into not fewer than 2 parts and not more than 100 parts.

### (Splitting step)

In the splitting step, the support of the diced laminate is stretched to split the electrode mixed material layer in the stretching direction and obtain a split electrode mixed material layer. As previously described, the support of the presently disclosed laminate for an electrochemical device has a tensile modulus of elasticity of not less than 10 MPa and not more than 1,000 MPa. The temperature during stretching is normally not lower than 0°C and not higher than 50°C, and the stretching ratio is normally more than 1.0 and not more than 2.0. On the other hand, the electrode mixed material layer and the adhesive layer have a lower tensile modulus of elasticity than the support. Therefore, when the support is stretched, the adhesive layer and the electrode mixed material layer try to accompany the support due to adhesive force between the support and the adhesive layer, which may lead to stress arising in each layer, but since the adhesive layer and the electrode mixed material layer have a low tensile modulus of elasticity, split pieces are formed through splitting at the split starting point. These split pieces include the split electrode mixed material layer. The resultant split electrode mixed material layer has high edge strength. The reason for this is presumed to be as follows.

In general, when an electrode mixed material layer is formed, strength and/or basis weight accuracy tend to be inadequate at a surface direction peripheral edge of the electrode mixed material layer and in proximity thereto (hereinafter, also referred to collectively as a "peripheral section"). In a case in which the electrode mixed material layer is formed using composite particles, this may be due to it not being possible to ensure adequate layer thickness at the peripheral section. It is also expected that basis weight accuracy and strength of a peripheral section will be poorer than in other regions even in a case in which a product of sheet-forming of an electrode composition is used or in a case in which the electrode mixed material layer is formed through application and drying of a slurry composition. By splitting the electrode mixed material layer after formation thereof in the presently disclosed production method, it is possible to avoid inclusion of the peripheral section in the resultant split electrode mixed material layer, and to thereby increase electrode mixed material layer strength and basis weight accuracy.

Note that it is not essential that the entire adhesive layer is split to form a split adhesive layer in the splitting step. For example, in a case in which the adhesive layer displays ductility, the adhesive layer may be in a state in which part thereof is not split.

The "stretching direction" in the splitting step may be at least the longitudinal direction of the support in a case in which a belt-shaped support is envisaged. In such a case, although a peripheral section along the longitudinal direction of the support becomes included in the split electrode mixed material layer, the strength and basis weight accuracy of the split electrode mixed material layer are higher than those of an electrode mixed material layer formed by a conventional method because an edge of the split electrode mixed material layer along the width direction of the support has excellent strength and basis weight accuracy. It is of course also possible to perform stretching in the width direction when a belt-shaped support is envisaged. In such a case, an edge of the split electrode mixed material layer along the longitudinal direction of the support will also have excellent strength and basis weight accuracy.

### (Adhering step)

In the adhering step, the split electrode mixed material layer is adhered to the substrate for an electrochemical device. It is preferable that the split electrode mixed material layer is adhered to a conductive adhesive layer that is an outermost layer of the substrate for an electrochemical device. Specifically, in this step, the surface of the split electrode mixed material layer and the outermost layer of the substrate for an electrochemical device are positioned adjacently to one another, and the split electrode mixed material layer is adhered to the substrate for an electrochemical device to obtain a preliminary component. Close adherence between the split electrode mixed material layer and the substrate for an electrochemical device can be increased by performing pressing in this adhering. Moreover, the split electrode mixed material layer and the substrate for an electrochemical device may be adhered by hot pressing in which heat is imparted concurrently to pressing.

The hot pressing may, more specifically, be batch hot pressing, continuous hot roll pressing, or the like, with continuous hot roll pressing providing increased productivity being preferable. The hot pressing temperature is normally 50°C to 200°C, and preferably 70°C to 150°C, but is not specifically limited so long as it does not cause loss of the substrate. A hot pressing temperature that is within any of these ranges enables uniform pasting of the split electrode mixed material layer and the substrate for an electrochemical device and can increase the strength of an obtained component for an electrochemical device.

The line pressure in hot pressing is normally 1.0 kN/m to 500 kN/m but is not specifically limited so long as it does not cause loss of the substrate. A hot pressing line pressure that is within this range enables uniform pasting of the electrode mixed material layer and the substrate for an electrochemical device.

The density of the electrode mixed material layer (split electrode mixed material layer) that has undergone the adhering step is preferably a density such that, when compared to the density of the electrode mixed material layer at an earlier stage than the adhering step, the density change is not less than 5% and not more than 20%. In other words, the rate of change of density of the electrode mixed material layer between before and after transfer is preferably 5% or more, which means that the density of the electrode mixed material layer after transfer is preferably slightly higher than the density of the electrode mixed material layer before transfer. Therefore, in a case in which a laminate for an electrochemical device including an electrode mixed material layer formed using composite particles is used, for example, it is preferable to select a laminate for an electrochemical device that is formed without excessively raised pressure in a pressure application step during formation of the electrode mixed material layer. Moreover, the change of density between before and after transfer is preferably 20% or less, which means that the density of the electrode mixed material layer after transfer is preferably not excessively higher than the density of the electrode mixed material layer before transfer. Therefore, in a case in which a laminate for an electrochemical device including an electrode mixed material layer formed using composite particles is used, for example, it is preferable to select a laminate for an electrochemical device that is formed with application of suitably high pressure in a pressure application step during formation of the electrode mixed material layer. Moreover, it is preferable that an appropriate pressure is applied during transfer (i.e., during the adhering step), for example. By limiting the change of density between before and after transfer to 20% or less, change occurring in the electrode mixed material layer during transfer can be inhibited from becoming excessively large, and the occurrence of electrode collapse can be inhibited. For these reasons, when the change of density of the electrode mixed material layer between before and after transfer is not less than 5% and not more than 20%, the ease of transfer can be increased while enabling good positioning of the electrode mixed material layer on a laminate by transfer. Note that the value of the change of density is the proportion constituted by the increase in density of the electrode mixed material layer at a later stage than the adhering step when the density of the electrode mixed material layer at an earlier stage than the adhering step is taken to be 100%. More specifically, the value of the change of density can be calculated by a method described further below in the EXAMPLES section.

As described above, the value of the change of density can be adjusted by, for example, altering the chemical composition in formation of the electrode mixed material layer in the preparation step, the pressing strength in a pressure application operation when such an operation is performed, the pressing strength in a pressing operation when such an operation is performed in the adhering step, and so forth.

### (Peeling step)

In the peeling step, the support and, optionally, the adhesive layer are peeled from the preliminary component to obtain a component for an electrochemical device. The support, etc., may be peeled from the preliminary component in the peeling step by winding the support using a known winding machine such as a winder, but is not specifically limited to being peeled in this manner.

In a case in which the adhesive layer of the laminate for an electrochemical device contains an active energy ray-curable adhesive, it is preferable that a curing step of curing the active energy ray-curable adhesive is further included at any timing after the previously described splitting step and before the peeling step. This is because peeling from the support is facilitated and ease of peeling in the peeling step is improved by implementing this curing step. The timing at which the curing step is performed is preferably between the splitting step and the adhering step. By curing the active energy ray-curable adhesive forming the adhesive layer at the timing described above, the ease of peeling in the subsequent peeling step can be further increased.

In the component for an electrochemical device obtained through the step described above, an occupied area ratio of the split electrode mixed material layer relative to the substrate for an electrochemical device is preferably not less than 50 area% and not more than 95 area%. When the occupied area ratio of the split electrode mixed material layer is within the range set forth above, a component for an electrochemical device that enables improvement of electrochemical device production efficiency is obtained.

A cutting line formation step of forming a cutting line in the substrate for an electrochemical device that is obtained through the peeling step and that includes the split electrode mixed material layer at the surface may optionally be implemented. Formation of a cutting line can be implemented using a known means such as a perforating blade in the same way as in the previously described dicing step. When the substrate for an electrochemical device including the split electrode mixed material layer at the surface has a cutting line, the substrate for an electrochemical device having the split electrode mixed material layer at the surface can be split along the cutting line and then used.

The component for an electrochemical device obtained through the steps described above may be incorporated into a product as an electrode of an electrochemical device.

### EXAMPLES

The following provides a more specific description of the present disclosure based on examples. However, the present disclosure is not limited to the following examples. In the following description, "%" and "parts" used in expressing quantities are by mass, unless otherwise specified.

In each example or comparative example, a lithium ion secondary battery was produced as one example of an electrochemical device. In particular, a negative electrode or positive electrode of a lithium ion secondary battery, as one example of a component for an electrochemical device, was produced in accordance with the presently disclosed laminate for an electrochemical device and the presently disclosed production method using this laminate.

In the examples and comparative examples, the following methods were used to measure and evaluate the tensile modulus of elasticity of a support, the glass-transition temperature of organic particles, the thickness of each layer, and the change of density, occupied area ratio, basis weight accuracy, and edge strength of an electrode mixed material layer.

### <Tensile modulus of elasticity of support>

The tensile modulus of elasticity of a support was measured in accordance with JIS K7127.

### <Glass-transition temperature of organic particles>

A water dispersion containing organic particles was prepared as a measurement sample.

Next, a differential scanning calorimeter (EXSTAR DSC6220 produced by SII NanoTechnology Inc.) was used to measure a DSC curve by weighing 10 mg of dried measurement sample into an aluminum pan, using an empty aluminum pan as a reference, and performing measurement under normal temperature and humidity in a measurement temperature range of -100°C to 500°C and with a heating rate of 10°C/min. In the heating process, the glass-transition temperature was determined from an intersection point of a base line directly before a heat absorption peak on the DSC curve at which a differential signal (DDSC) reached 0.05 mW/min/mg or more and a tangent to the DSC curve at a first inflection point to appear after the heat absorption peak.

### <Thickness of each layer>

An electrode obtained by a production method in accordance with the present disclosure in each example or comparative example was punched out as 90 mm × 90 mm, and was then divided into 9 parts of 30 cm × 30 cm to obtain measurement specimens. Cross-sectional observation of each measurement specimen was performed by a tabletop microscope (TM3030Plus produced by Hitachi High-Technologies Corporation; × 1,000 magnification), 10 samples were measured, and the average of the measurements was taken to be the thickness of each layer.

### <Change of density of electrode mixed material layer>

After a preparation step in each example or comparative example, the initial density D1 of an electrode mixed material layer was measured at a point at an earlier stage than an adhering step. The post-transfer density D2 of the electrode mixed material layer was measured at a point at a later stage than a peeling step. In the measurement method of D1 and D2, samples of the same size as in measurement of the "Thickness of each layer" were taken at each point and the mass thereof was measured. A value obtained by subtracting the mass of other elements (inclusive of a substrate or support other than the electrode mixed material layer) was divided by the thickness of the electrode mixed material layer to calculate the density. A value for the rate of change of density (%) was calculated by an equation: (D2 - D1)/D1 × 100.

### <Electrode mixed material layer occupied area ratio>

With respect to a belt-shaped component for an electrochemical device obtained in each example or comparative example that included a plurality of split electrode mixed material layers at the surface, an occupied area ratio calculation region of 1,000 mm in a longitudinal direction of the component for an electrochemical device was set with one end thereof at an edge position of one of the split electrode mixed material layers and such as to include that split electrode mixed material layer. The area occupied by the split electrode mixed material layers in the occupied area ratio calculation region was calculated.

### <Electrode basis weight accuracy>

Circles of 16 mm in diameter were punched from a produced electrode at 20 points at intervals of 2 cm. The basis weight of the mixed material layer was calculated from the area and the weight. The difference R between the largest value and the smallest value of the basis weights measured at the 20 points was calculated. A smaller value for R represents higher accuracy.
A: Not less than 0 mg/cm² and less than 0.2 mg/cm²
B: Not less than 0.2 mg/cm² and less than 0.5 mg/cm²
C: Not less than 0.5 mg/cm² and less than 1.0 mg/cm²
D: 1.0 mg/cm² or more

### <Edge strength of electrode mixed material layer>

A belt-shaped negative electrode was unwound from a produced negative electrode roll. A test specimen of 5.0 cm × 5.0 cm was cut out such that one side thereof was an edge surface formed through a dicing step and a splitting step in production of the negative electrode. The test specimen was subjected to ultrasonic welding (actuator produced by Branson (Ultraweld L20E)) under conditions of an amplitude of 37.6 µm, a pressure of 40 psi, a time of 0.3 s, and a frequency of 20 kHz. The mass before ultrasonic welding was taken to be W0, the mass after ultrasonic welding was taken to be W1, and the rate of change (W1/W0) × 100(%) was evaluated. A smaller rate of change indicates higher edge strength. Note that in Example 7, a positive electrode roll that had been produced was used instead of a negative electrode roll.
A: 99% or more
B: Not less than 95% and less than 99%
C: Not less than 90% and less than 95%
D: Less than 90%

### (Example 1)

A negative electrode was produced as a component for an electrochemical device through steps from a preparation step up to a peeling step such as described below. The obtained negative electrode was evaluated by the methods described above.

### <Preparation step>

### 1. Laminate for electrochemical device

### [Preparation step of composition for adhesive layer]

An ultraviolet-curable adhesive (composition for adhesive layer) was obtained by adding 100 g in terms of solid content of a toluene solution of a double bond-containing acrylic resin capable of chain polymerization, 7.0 g in terms of solid content of a polyfunctional isocyanate (CORONATE L produced by Nippon Polyurethane Industry Co., Ltd.; solid content: 75%) as a cross-linker, 1.0 g of 1-hydroxycyclohexyl phenyl ketone (IRGACURE 184 produced by Ciba Specialty Chemicals Ltd.) as a polymerization initiator, and ethyl acetate such that the total solid content was 27 mass%, and uniformly stirring these materials for 10 minutes.

### [Formation step of composite particles for negative electrode]

A composition for an electrode mixed material layer was prepared by loading 96 parts of graphite (average particle diameter: 15 µm) as a negative electrode active material, 2 parts in terms of solid content of styrene-butadiene copolymer (BM-480B produced by ZEON CORPORATION; glass-transition temperature: -25°C; solid content concentration: 40%) as organic particles, and 2 parts of a sodium salt of carboxymethyl cellulose (CMC-Na) as a thickener into a Planetary Despa with 150 parts of water as a solvent, and performing uniform mixing thereof.

A spray dryer (OC-16 produced by Ohkawara Kakohki Co., Ltd.) was used to perform spray drying granulation of the composition for an electrode mixed material layer under conditions of a rotating disk atomizer (diameter: 65 mm) rotation speed of 25,000 rpm, hot-air drying at 150°C, and a particle collection outlet temperature of 90°C to obtain composite particles for a negative electrode having an average particle diameter (volume-average particle diameter D50) of 75 µm.

### [Formation step of laminate for electrochemical device]

The ultraviolet-curable adhesive prepared as described above was applied with a thickness of 3 µm onto one side of polypropylene film (width: 180 mm; thickness: 50 µm; tensile modulus of elasticity: 400 MPa) using a gravure coater so as to form an adhesive layer. The composite particles for a negative electrode prepared as described above were then supplied onto the adhesive layer such as to have a basis weight of 10 mg/cm². Next, a roller squeegee was applied, leveling was performed, and then the composite particles for a negative electrode were pressed to form a negative electrode mixed material layer having a density of approximately 1.27 g/cm³. In this manner, a laminate for an electrochemical device was obtained in which a negative electrode mixed material layer was held at one side of a support including an adhesive layer formed from an ultraviolet-curable adhesive.

### 2. Substrate for electrochemical device

### [Preparation step of composition for conductive adhesive]

A slurry (composition for conductive adhesive) having a solid content concentration of 30% was obtained by using a planetary mixer to perform mixing and dispersing of 80 parts of graphite (KS-6 produced by Timcal; volume-average particle diameter: 3.7 µm) and 20 parts of carbon black (Super-P produced by Timcal; volume-average particle diameter: 0.4 µm) as carbon particles; 4 parts of an ammonium salt of carboxymethyl cellulose (degree of etherification: 0.6; 1% aqueous solution viscosity: 30 mPa·s) as a dispersant; 8 parts of a water dispersion (solid content concentration: 40%) containing an acrylate polymer (copolymer of 2-ethylhexyl acrylate (76 mass%), acrylonitrile (20 mass%), and itaconic acid (4 mass%)) as a binder for a conductive adhesive layer; and 261 parts of water as a solvent.

### [Formation step of substrate for electrochemical device including conductive adhesive layer]

The composition for a conductive adhesive described above was applied onto one side of electrolytic copper foil (thickness: 15 µm; width: 200 mm) serving as a substrate at a rate of 10 m/min and was then dried in a drying oven under conditions of a drying temperature of 100°C and a drying time of 1 minute to obtain a substrate equipped with a conductive adhesive layer having a thickness of 2 µm and a coating width of 160 mm (substrate for electrochemical device including conductive adhesive layer at surface).

### <Dicing step>

A roll having a perforating blade standing along a circumferential surface axial direction was pressed against the electrode mixed material layer surface of the laminate for an electrochemical device prepared in the preparation step, and in this manner dicing of the laminate was performed to obtain a diced laminate. Multiple perforating blades separated by intervals of 100 mm in the circumferential direction were disposed on the circumferential surface of the roll. The laminate for an electrochemical device that had undergone dicing had perforations at intervals of 100 mm in the longitudinal direction.

### <Splitting step>

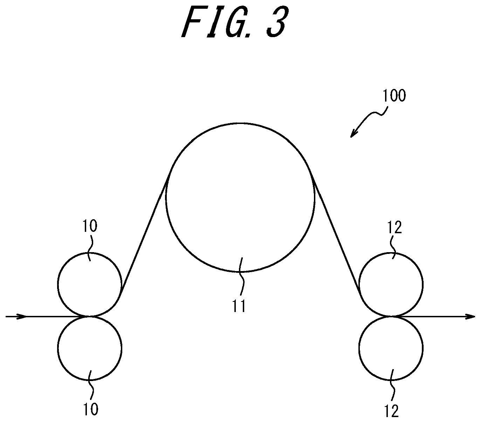

The diced laminate obtained by the step described above was stretched to split the negative electrode mixed material layer in the stretching direction using a hot roll stretching device 100 having a schematic configuration illustrated in FIG. 3. The hot roll stretching device 100 included first nip rolls 10, a hot roll 11, and second nip rolls 12 in order from upstream in a conveyance direction of the diced laminate. The thickness of the diced laminate was 118 µm. In hot roll stretching using the hot roll stretching device 100, the temperature of the hot roll 11 was set as 50°C, the circumferential speed of the hot roll 11 was set as faster than the circumferential speed of the first nip rolls 10, and tension (tensile force) for stretching was applied through this difference in circumferential speed so as to perform 5% stretching (longitudinal uniaxial stretching) of the diced laminate. This splitting process resulted in a diced laminate being obtained in which split pieces including a split negative electrode mixed material layer that had been split with a width of 100 mm were disposed on the support formed by the polypropylene film.

### <Curing step>

Next, the diced laminate that had passed through the hot roll stretching device 100 was conveyed at a conveyance speed of 6 m/min while being irradiated with ultraviolet light from the support side of the diced laminate using a metal halide lamp illuminant set to an illuminance of 70 mW/cm² at a center wavelength of 355 nm and an irradiation dose of 200 mJ/cm² so as to cure the ultraviolet-curable adhesive forming the adhesive layer.

### <Adhering step>

Next, a roll press (Press Cutting Rough Surface Hot Roll produced by Hirano Gikenkogyo Co., Ltd.) was used to perform hot pressing of the laminate for an electrochemical device and the conductive adhesive layer-equipped substrate so as to closely adhere the surface of the split negative electrode mixed material layer of the laminate and the surface of the conductive adhesive layer of the conductive adhesive layer-equipped substrate, and thereby obtain a preliminary component. In the hot pressing, roll pressing was performed under conditions of a forming rate of 6 m/min, a roll temperature of 100°C, and a pressing line pressure of 1.7 kN/cm.

### <Peeling step>

Next, the support (polypropylene film) of the laminate for an electrochemical device was peeled from the preliminary component to obtain a roll of a component for an electrochemical device (negative electrode roll) including a negative electrode mixed material layer of 65 µm in thickness and 160 mm in width. The density of the negative electrode mixed material layer was approximately 1.5 g/cm³. The occupied area ratio of the negative electrode mixed material layer obtained at one side of the substrate for an electrochemical device, calculated as previously described, was 80%. A test specimen was obtained from the resultant negative electrode roll, and edge strength and basis weight accuracy of the electrode mixed material layer were evaluated by the previously described methods. The results are shown in Table 1.

### (Examples 2 and 3)

The same steps and evaluations as in Example 1 were performed with the exception that the support material in production of a negative electrode as a component for an electrochemical device was changed as shown in Table 1. The results are shown in Table 1.

### (Example 4)

The same steps and evaluations as in Example 1 were performed with the exception that an adhesive layer was formed using styrene-butadiene copolymer (BM-480B produced by ZEON CORPORATION; glass-transition temperature: -25°C) in production of a negative electrode as a component for an electrochemical device. The results are shown in Table 1.

### (Examples 5 and 6)

The same steps and evaluations as in Example 1 were performed with the exception that the thickness of an adhesive layer in production of a negative electrode as a component for an electrochemical device was changed as shown in Table 1. The results are shown in Table 1.

### (Example 7)

A positive electrode was produced as a component for an electrochemical device in accordance with the present disclosure.

### <Preparation step>

### 1. Laminate for electrochemical device

### [Formation step of composite particles for positive electrode mixed material layer]

In formation of a positive electrode mixed material layer, composite particles were prepared. First, a composition for a positive electrode mixed material layer was prepared by loading 96 parts of lithium cobalt oxide having a layered structure (LiCoO₂; particle diameter: 12 µm) as a positive electrode active material, 2 parts of acetylene black (HS-100 produced by Denka Company Limited) as a conductive material, 2 parts of polyvinylidene fluoride (PVdF; KF-7200 produced by Kureha Corporation; glass-transition temperature: -30°C) as organic particles, and an appropriate amount of NMP into a Planetary Despa and performing uniform mixing thereof.

A spray dryer (OC-16 produced by Ohkawara Kakohki Co., Ltd.) was used to perform spray drying granulation of the composition for a positive electrode mixed material layer under conditions of a rotating disk atomizer (diameter: 65 mm) rotation speed of 25,000 rpm, hot-air drying at 150°C, and a particle collection outlet temperature of 90°C to obtain composite particles for a positive electrode having an average particle diameter of 75 µm.

### [Laminate formation step]

A laminate for an electrochemical device having a positive electrode mixed material layer disposed at one side was obtained in the same way as in Example 1 with the exception that the composite particles for a positive electrode obtained as described above were used.

### 2. Substrate for electrochemical device

### [Formation step of substrate for electrochemical device including conductive adhesive layer]

A conductive adhesive layer-equipped substrate (substrate for electrochemical device having conductive adhesive layer at surface) was obtained in the same way as in Example 1 with the exception that aluminum foil (thickness: 20 µm; width: 200 mm) was used as a substrate.

### <Splitting step to peeling step>

The laminate for an electrochemical device and the conductive adhesive layer-equipped substrate obtained as described above were used to perform steps from a splitting step up to a peeling step in the same way as in Example 1 so as to obtain a roll of a component for an electrochemical device (positive electrode roll) including a positive electrode mixed material layer having a thickness of 60 µm and a width of 160 mm. The density of the positive electrode mixed material layer was approximately 3.5 g/cm³. A test specimen was obtained from the resultant positive electrode roll, and edge strength and basis weight accuracy of the electrode mixed material layer were evaluated by the previously described methods. The results are shown in Table 1.

### (Comparative Examples 1 to 3)

The support used in production of a negative electrode as a component for an electrochemical device was changed as shown in Table 1. Note that a separator made from polypropylene was used as the support in Comparative Example 3. This polypropylene separator was porous. Although longitudinal uniaxial stretching was performed under the same conditions as in Example 1 in a splitting step of each of these comparative examples, the stretching ratio was not of the same level as in Example 1. With the exception of these points, the same steps and evaluations as in Example 1 were performed. The results are shown in Table 1.

### (Comparative Example 4)

A laminate for an electrochemical device was not produced, and composite particles for a negative electrode that were prepared in the same way as in Example 1 were used to form electrode mixed material layers of 160 mm × 90 µm each in size at intervals of 5.5 mm in a longitudinal direction at one side of electrolytic copper foil (thickness: 15 µm ; width: 200 mm) serving as a substrate. Specifically, a composition for a conductive adhesive prepared in the same way as in Example 1 was intermittently applied at one side of the electrolytic copper foil (thickness: 15 µm; width: 200 mm) serving as a substrate at a rate of 10 m/min so as to form coated sections of 100 mm and uncoated sections of 5.5 mm. Next, drying was performed in a drying oven under conditions of a drying temperature of 100°C and a drying time of 1 minute to obtain a substrate equipped with a conductive adhesive layer having a thickness of 2 µm and a coating width of 160 mm (substrate for electrochemical device having conductive adhesive layer at surface). The composite particles for a negative electrode prepared as described above were then supplied onto the substrate such as to have a basis weight of 10 mg/cm². Next, a roller squeegee was applied, leveling was performed, and then the composite particles for a negative electrode were pressed to form a negative electrode mixed material layer having a density of approximately 1.50 g/cm³. In this manner, a laminate for an electrochemical device was obtained in which a negative electrode mixed material layer was held at one side of a support including an adhesive layer formed from an ultraviolet-curable adhesive. The same steps and evaluations as in Example 1 were performed. The results are shown in Table 1.

In Table 1, shown below:
"Tg" indicates glass-transition temperature;
"PP" indicates polypropylene resin;
"PE" indicates polyethylene resin;
"PVA" indicates polyvinyl alcohol resin;
"PP separator" indicates separator made from polypropylene;
"SBR" indicates styrene-butadiene copolymer;
"LCO" indicates lithium cobalt oxide; and
"PVdF" indicates polyvinylidene fluoride.

**Table 1**

| | | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|---|
| Type of component for electrochemical device | | | | Negative electrode | Negative electrode | Negative electrode | Negative electrode | Negative electrode | Negative electrode | Positive electrode | Negative electrode | Negative electrode | Negative electrode | Negative electrode |
| Type of production method | | | | Transfer | Transfer | Transfer | Transfer | Transfer | Transfer | Transfer | Transfer | Transfer | Transfer | Direct powder forming |
| Laminate for electrochemical device | Support | Type | | PP | PE | PVA | PP | PP | PP | PP | PET | Printing paper | PP separator | - |
| | | Tensile modulus of elasticity (MPa) | | 400 | 50 | 700 | 400 | 400 | 400 | 400 | 4000 | 3000 | 1500 | - |
| | | Thickness (µm) | | 50 | 50 | 50 | 50 | 50 | 50 | 50 | 50 | 50 | 25 | - |
| | Adhesive layer | Type | | Ultraviolet curable | Ultraviolet curable | Ultraviolet curable | SBR | Ultraviolet curable | Ultraviolet curable | Ultraviolet curable | Ultraviolet curable | Ultraviolet curable | Ultraviolet curable | - |
| | | Thickness (µm) | | 3 | 3 | 3 | 3 | 1 | 15 | 3 | 3 | 3 | 3 | - |
| | Electrode mixed material layer | Electrode active material | | Graphite | Graphite | Graphite | Graphite | Graphite | Graphite | LCO | Graphite | Graphite | Graphite | Graphite |
| | | Organic particles | Type | SBR | SBR | SBR | SBR | SBR | SBR | PVdF | SBR | SBR | SBR | SBR |
| | | | Tg(°C) | -25 | -25 | -25 | -25 | -25 | -25 | -35 | -25 | -25 | -25 | -25 |
| | | Occupied area ratio (%) | | 80 | 80 | 80 | 80 | 80 | 80 | 80 | 90 | 85 | 85 | 80 |
| | | Rate of change of density (%) | | 15 | 15 | 15 | 15 | 15 | 15 | 15 | 15 | 15 | 15 | - |
| Evaluation | | Basis weight accuracy | | A | B | B | B | B | B | A | D | D | D | D |
| | | Edge strength | | A | A | A | A | A | A | A | C | C | B | D |

It can be seen from Table 1 that the electrochemical device components of Examples 1 to 7, which were each obtained using a laminate for an electrochemical device including an adhesive layer and an electrode mixed material layer, in stated order, on the surface of a support having a tensile modulus of elasticity of not less than 10 MPa and not more than 1,000 MPa, had excellent basis weight accuracy and edge strength.

On the other hand, it can be seen that is was not possible to achieve both basis weight accuracy and edge strength for the electrochemical device components of Comparative Examples 1 to 3, which were each obtained using a laminate for an electrochemical device that included a support having a tensile modulus of elasticity of more than 1,000 MPa, and for the electrochemical device component of Comparative Example 4, which was obtained by forming an electrode mixed material layer from composite particles for a negative electrode directly on an electrode substrate. Particularly in Comparative Example 3, adhesive layer thickness was uneven due to the porosity of the support and, as a result, the basis weight accuracy of the electrode mixed material layer decreased.

### INDUSTRIAL APPLICABILITY

According to the present disclosure, it is possible to provide a laminate for an electrochemical device capable of forming a component for an electrochemical device that includes an electrode mixed material layer having high edge strength and basis weight accuracy.

Moreover, according to the present disclosure, it is possible to provide a method of producing a component for an electrochemical device that includes an electrode mixed material layer having high edge strength and basis weight accuracy.

### REFERENCE SIGNS LIST

- 10: first nip roll
- 11: hot roll
- 12: second nip roll
- 20: support
- 21: adhesive layer
- (21'): adhesive layer having split starting point
- 21': split adhesive layer
- 22: electrode mixed material layer
- (22'): electrode mixed material layer having split starting point
- 22': split electrode mixed material layer
- 23: substrate for electrochemical device
- 24: cutting line
- 100: hot roll stretching device

## Claims

1. A laminate for an electrochemical device comprising an adhesive layer and an electrode mixed material layer, in stated order, on a surface of a support, wherein
the support has a tensile modulus of elasticity of not less than 10 MPa and not more than 1,000 MPa.

2. The laminate for an electrochemical device according to claim 1, wherein the adhesive layer contains an active energy ray-curable adhesive.

3. The laminate for an electrochemical device according to claim 1 or 2, wherein the adhesive layer has a thickness of not less than 1 µm and not more than 50 µm.

4. The laminate for an electrochemical device according to any one of claims 1 to 3, wherein the support has a thickness of not less than 10 µm and not more than 200 µm.

5. The laminate for an electrochemical device according to any one of claims 1 to 4, wherein the electrode mixed material layer contains organic particles having a glass-transition temperature of not lower than -40°C and not higher than 20°C.

6. The laminate for an electrochemical device according to any one of claims 1 to 5, wherein a split starting point is present in the electrode mixed material layer.

7. A method of producing a component for an electrochemical device including an electrode mixed material layer, comprising:
a dicing step of dicing the laminate for an electrochemical device according to any one of claims 1 to 5 to obtain a diced laminate;
a splitting step of stretching the support of the diced laminate to split the electrode mixed material layer in a direction of the stretching and obtain a split electrode mixed material layer;
an adhering step of adhering the split electrode mixed material layer to a substrate for an electrochemical device to obtain a preliminary component; and
a peeling step of peeling the support from the preliminary component.

8. The method of producing a component for an electrochemical device according to claim 7, wherein an occupied area ratio of the split electrode mixed material layer relative to the substrate for an electrochemical device is not less than 50 area% and not more than 95 area%.

9. The method of producing a component for an electrochemical device according to claim 7 or 8, wherein a rate of change of electrode mixed material layer density when comparing before the adhering step and after the adhering step is not less than 5% and not more than 20%.

10. The method of producing a component for an electrochemical device according to any one of claims 7 to 9, wherein an outermost layer of the substrate for an electrochemical device is a conductive adhesive layer, and the conductive adhesive layer is adhered to the split electrode mixed material layer in the adhering step.
